# EUROPÄISCHE PATENTSCHRIFT

(11) **EP 0 464 240 B1**
(45) Veröffentlichungstag und Bekanntmachung des Hinweises auf die Patenterteilung: **27.09.1995**
(21) Anmeldenummer: 90112712.6
(22) Anmeldetag: 03.07.1990
(51) Int. Cl.: H02M 3/335

(54) **Schaltungsanordnung für ein freischwingendes Sperrwandler-Schaltnetzteil**
Circuit for a blocking oscillator converter working in the auto-oscillation mode
Circuit pour les alimentations à découpage auto-oscillatrices du type blocking

(43) Veröffentlichungstag der Anmeldung: 08.01.1992
(73) Patentinhaber: SIEMENS AKTIENGESELLSCHAFT, 80333 München (DE)
(72) Erfinder: Paulik, Ernst, D-8891 Hilgertshausen (DE); Dangschat, Rainer, D-8011 Landsham (DE)

(56) Entgegenhaltungen:
- EP-A- 0 346 849
- DE-A- 3 025 405
- DE-A- 3 347 930
- US-A- 4 683 529

## Beschreibung

Die Erfindung bezieht sich auf eine Schaltungsanordnung für ein freischwingendes Sperrwandler-Schaltnetzteil mit den Merkmalen:
- das Schaltnetzteil enthält einen Transformator mit einer Primärwicklung und einer Sekundärwicklung, an die eine Last anschließbar ist,
- es enthält einen Brückengleichrichter, mit einem Ausgangsanschluß für eine gleichgerichtete Wechselspannung,
- es enthält ein Halbleiterschaltelement, durch das die gleichgerichtete Wechselspannung in getakteter Weise an die Primärwicklung des Transformators anlegbar ist,
- es enthält eine Steuerungseinrichtung zum Ansteuern des Halbleiterschaltelements, das eine erste Eingangsklemme für ein Primärstromsignal und eine zweite Eingangsklemme für ein Spannungssignal aufweist,
- an die erste Eingangsklemme ist der Ausgang eines RC-Gliedes angeschlossen, dem eingangsseitig die gleichgerichtete Wechselspannung zuführbar ist,
- an die zweite Eingangsklemme ist der Ausgang eines Spannungsteilers angeschlossen, dem eingangsseitig die gleichgerichtete Wechselspannung zuführbar ist.

Schaltnetzteile sind hochfrequente Störquellen, die der Funkentstörung bedürfen. Werden Schaltnetzteile von einer gleichzurichtenden Netzwechselspannung versorgt, so entstehen auf dem Versorgungsnetz Oberwellenströme, die unerwünscht sind und in Zukunft durch die Verschärfung der Grenzwerte der zulässigen Oberwellenströme von den Energieversorgungsunternehmen nicht mehr akzeptiert werden. Eine sinusförmige Stromaufnahme der Schaltnetzteile wird deshalb angestrebt.

Während die Funkentstörung bisher bei Schaltnetzteilen im wesentlichen durch stromkompensierte Drosseln funktionierte, blieben die von den Schaltnetzteilen verursachten Oberwellenströme auf dem Netz unbeachtet. Da die Verschärfung der Grenzwerte der zulässigen Oberwellenströme auch für Schaltnetzteile in nachrichtentechnischen Geräten, wie beispielsweise Fernsehgeräten, gilt, muß auch dort versucht werden, die Oberwellenströme zu reduzieren.

Bei einem aus der Siemens-Produktinformation "Funktion und Anwendung des Sperrwandler-IC TDA 4605" bekannten Schaltnetzteil ist die Primärwicklung an eine gleichgerichtete und über einen Glättungskondensator entsprechender Kapazität geglättete Netzwechselspannung angeschlossen. Dadurch wird nur dann ein Strom aus dem Netz aufgenommen, wenn die Momentanspannung der gleichgerichteten Halbwelle größer als die am Glättungskondensator abfallende Spannung ist. Daraus resultiert eine Stromaufnahme im Bereich der Maxima und Minima der Netzwechselspannung. Ein solches Schaltnetzteil weist also keine sinusförmige Stromaufnahme auf und wirkt in das Netz mit Oberwellenströmen zurück.

In der US-Patentschrift 4 683 529 ist eine geschaltete Stromversorgung gezeigt, die einen möglichst großen Leistungsfaktor und möglichst sinusförmigen Eingangsstrom aufweisen soll. Das Netzteil enthält eine Spule, an die mittels eines taktgesteuerten Transistors eine ungeglättete, gleichgerichtete Wechselspannung anlegbar ist. Die Steuerungsschaltung zur Taktansteuerung des Transistors weist eine Spannungsüberwachungseinrichtung und eine Einrichtung zur Auswertung des Stroms durch die Spule auf. Der Spulenmstrom wird über einen Source-Widerstand des Schalttransistors abgegriffen. In der Spannungsüberwachungsschaltung wird eine aus der gleichgerichteten Wechselspannung abgeleitete Vorspannung mit einer Referenzspannung verglichen.

Es ist daher Aufgabe der Erfindung, eine Schaltungsanordnung für ein freischwingendes Sperrwandler-Schaltnetzteil der eingangs genannten Art zu verbessern, so daß die Rückwirkung seiner verursachten Oberwellenströme in das Netz unkritisch ist und mindestens annähernd eine sinusförmige Stromaufnahme aus dem Netz ermöglichst wird.

Diese Aufgabe wird dadurch gelöst, daß
- die gleichgerichtete Wechselspannung ungeglättet an die Primärwicklung des Transformators anlegbar ist, und daß
- dem Spannungsteiler und dem RC-Glied eingangsseitig über eine eine Diode und einen Kondensator enthaltende Einweggleichrichteranordnung die gleichgerichtete Wechselspannung zuführbar ist.

Weiterbildungen der Erfindung sind Gegenstand der Unteransprüche. Die Erfindung wird im folgenden anhand eines Ausführungsbeispiels im Zusammenhang mit sechs Figuren näher erläutert. Es zeigen:
- FIG 1: eine erste Schaltungsanordnung eines erfindungsgemäßen freischwingenden Sperrwandler-Schaltnetzteiles,
- FIG 2: eine zweite Schaltungsanordnung eines erfindungsgemäßen freischwingenden Sperrwandler-Schaltnetzteiles,
- FIG 3: den Stromverlauf durch das Halbleiterschaltelement in FIG 1 mit einer geringen Zeitauflösung,
- FIG 4: den Stromverlauf durch das Halbleiterschaltelement in FIG 1 mit einer hohen Zeitauflösung,
- FIG 5: die durch das Schaltnetzteil nach FIG 1 auf dem Versorgungsnetz auftretenden Oberwellenströme im Vergleich zu den Oberwellenströmen bei einem bisher bekannten Schaltnetzteil und
- FIG 6: den sinusförmigen Verlauf des vom Schaltnetzteil nach FIG 1 aus dem Versorgungsnetz aufgenommenen Stromes.

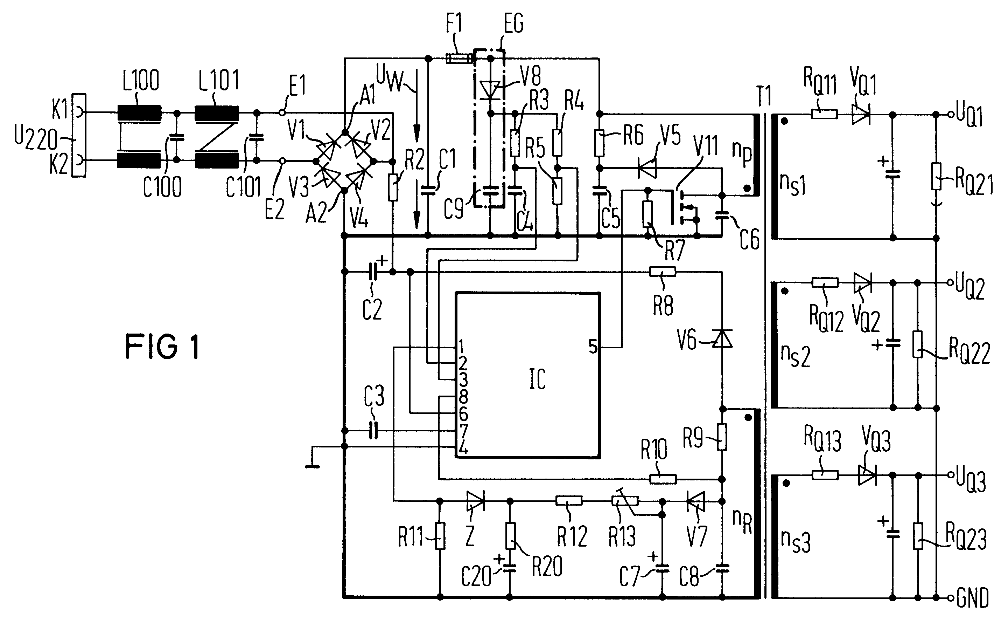

FIG 1 zeigt eine Schaltungsanordnung für ein freischwingendes Sperrwandler-Schaltnetzteil, wie es die Erfindung vorschlägt. Bis auf die im folgenden noch näher zu erläuternden und für die Erfindung wesentlichen Schaltungsunterschiede entspricht die Schaltung in FIG 1 der Schaltung von Bild 25 in der Siemens-Produktinformation "Funktion und Anwendung des Sperrwandler-IC TDA 4605", Bestell-Nr. B111-6090, auf die hiermit zum Zwecke der Offenbahrung ausdrücklich Bezug genommen wird. Im folgenden werden der besseren Übersichtlichkeit wegen auch die dort bereits verwendeten Bezugszeichen weiter verwendet.

Als Halbleiterschaltelement V11 dient ein MOSFET der eine von einem Brückengleichrichter V1, V2, V3, V4 gleichgerichtete Wechselspannung U_{W} an eine erste Wicklung nₚ eines Transformators T1 periodenweise schaltet. Erfindungsgemäß ist die gleichgerichtete Wechselspannung U_{W} -im Gegensatz zu den bisher bekannten Schaltnetzteilen- nicht geglättet. Wenn überhaupt, sollte ein Kondensator C1 mit einer Kapazität kleiner als etwa 1 µF an die Ausgangsklemmen A1 und A2 des Brückengleichrichters V1, V2, V3, V4 geschaltet werden. Zur Ansteuerung des Halbleiterschaltelementes V11 ist eine Steuereinrichtung IC vorgesehen, die nach Maßgabe mindestens eines an eine erste Eingangsklemme 2 der Steuereinrichtung IC anzulegenden Primärstromsignales sowie vorzugsweise eines die Steuereinrichtung IC freigebenden und an eine zweite Eingangsklemme 3 der Steuereinrichtung IC anzulegenden Spannungssignales pulsweitenmoduliert ein- und ausschaltet. In diesem Ausführungsbeispiel wird als Steuereinrichtung IC der integrierte Schaltkreis TDA 4605 eingesetzt. Das Primärstromsignal wird über eine an die Ausgangsklemme A1 des Brückengleichrichters V1, V2, V3, V4 geschaltete Einweggleichrichteranordnung EG mit nachgeschaltetem RC-Glied R3, C4 und das Spannungssignal durch einen der Einweggleichrichteranordnung EG nachgeschalteten Spannungsteiler R4, R5 bereitgestellt. Dazu ist hier beispielsweise an die Ausgangsklemme A1 - zweckmäßigerweise über eine Sicherung F1 - der Anodenanschluß einer Diode V8 gelegt, deren Katodenanschluß einerseits über einen Kondensator C9 an die auf Bezugspotential liegende Ausgangsklemme A2 und andererseits an das RC-Glied R3, C4 und den Spannungsteiler R4, R5 geschaltet ist. Das RC-Glied R3, C4 weist hier die Reihenschaltung eines Widerstandes R3 und eines Kondensators C4 auf, die wie die beiden Widerstände R4, R5 des Spannungsteilers zwischen den Katodenanschluß der Diode V8 und Bezugspotential geschaltet sind. Der Verbindungspunkt des Widerstandes R3 und Kondensators C4 ist mit der ersten Eingangsklemme 2 und der Verbindungspunkt der Widerstände R4, R5 mit der Eingangsklemme 3 des integrierten Schaltkreises TDA 4605 in Verbindung.

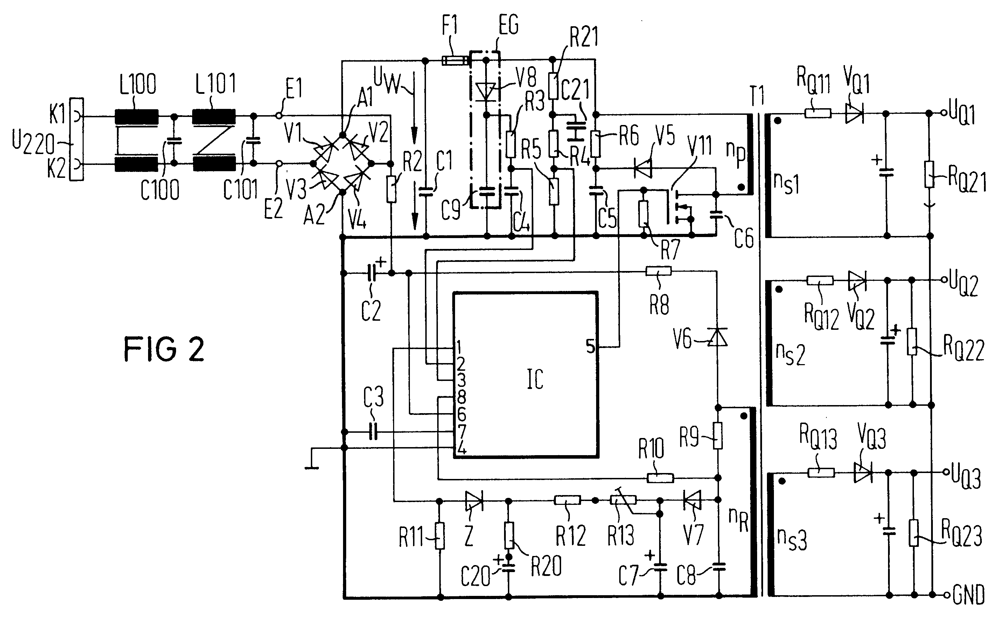

Das Spannungssignal zur Freigabe der Steuereinrichtung IC kann jedoch auch eingangsseitig an der Einweggleichrichteranordnung EG abgegriffen werden, wie FIG 2 zeigt. Dazu wird die Verbindung zwischen den Widerständen R4 und R3 aus FIG 1 aufgetrennt und der Widerstand R4 über einen Widerstand R21 eines weiteren RC-Gliedes R21, C21 an den Anodenanschluß der Diode V8 gelegt. Das RC-Glied R21, C21 und der Spannungsteiler R, R5 sind so zu bemessen, daß bei Anlegen der Netzwechselspannung U₂₂₀ an den Klemmen K1, K2 mindestens an der zweiten Eingangsklemme 3 der Steuereinrichtung IC eine Spannung anliegt, die die Steuereinrichtung einschaltet und bei Netzwechselspannungsunterbrechung ausschaltet.

Als Steuereinrichtung IC kann jedoch nicht nur der integrierte Schaltkreis TDA 4605 verwendet werden, sondern vielmehr jede Steuereinrichtung, die ein Primärstromsignal sowie ein die Steuereinrichtung freigebendes Spannungssignal benötigt. So können beispielsweise auch die unter der Bezeichnung TDA 4600, TDA 4601 und TDA 4601D bekannten Schaltnetzteil-IC bei einem erfindungsgemäßen Schaltnetzteil eingesetzt werden. Bei den zuletzt genannten integrierten Schaltkreisen muß das Primärstromsignal an die Klemme 4 und das Spannungssignal an die Klemme 5 des jeweiligen integrierten Schaltkreises angelegt werden.

Da das Halbleiterschaltelement V11 also eine ungeglättete Wechselspannung U_{W} an die Primärwicklung nₚ schaltet, tritt sowohl an den sekundärseitigen Ausgangsklemmen U_{Q1}, U_{Q2} und U_{Q3} als auch an der über die Diode V7 und den Kondensator C7 gleichgerichteten und von der Regelwicklung n_{R} kommende Regelspannung 100 Hz-Brumm auf. Der Brumm auf der Regelspannung kann beispielsweise dadurch beseitigt werden, daß die Kapazität des Kondensators C7 möglichst groß gewählt wird oder aber dadurch, daß parallel zum Widerstand R11 die Reihenschaltung eines Widerstandes R20 mit einem Kondensator C20 geschaltet wird und der Widerstand R20 etwa 330 Ohm und der Kondensator C20 etwa 22 µF aufweist. Zur Strombegrenzung der Regelspannung kann außerdem eine Zenerdiode Z mit ihrer Anode an den Widerstand R11 und mit ihrer Katode an den Widerstand R12 geschaltet werden.

Der 100 Hz-Brumm auf der Sekundärseite kann beispielsweise durch allgemein bekannte Spannungsstabilisatoren, wie diese unter der Bezeichnung TDB 78 XX bekannt sind, in einfacher Weise beseitigt werden.

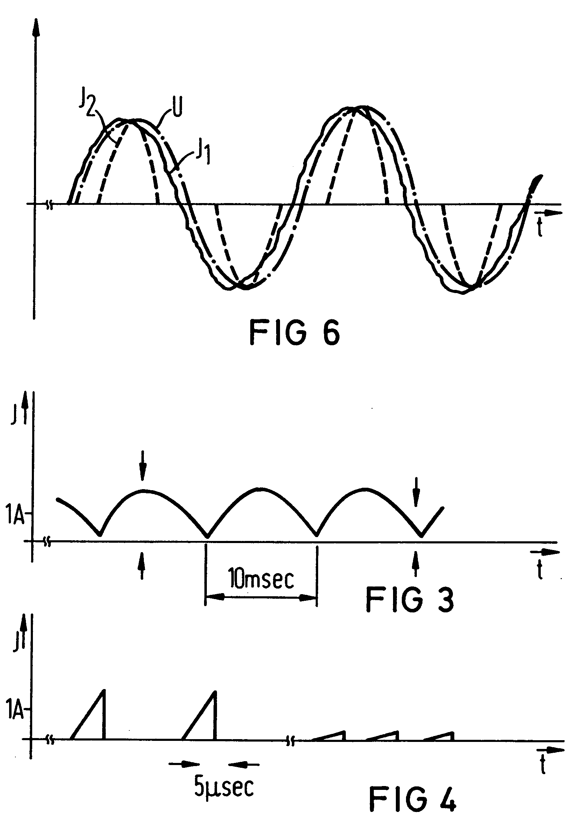

Die Wirkungsweise des in FIG 1 und FIG 2 dargestellten Schaltnetzteiles wird aus FIG 3 und 4 deutlich. FIG 3 zeigt den Drainstrom I durch den das Halbleiterschaltelement V11 bildenden MOSFET in Abhängigkeit von der Zeit t bei einer geringen zeitlichen Auflösung, wobei als Netzwechselspannung 220 V bei 50 Hertz an die Eingangsklemmen E1, E2 des Brückengleichrichters V1, V2, V3, V4 gelegt werden. Es ist deutlich zu erkennen, daß das Halbleiterschaltelement V11 einen Strom schaltet, der mit 100 Hertz moduliert ist. FIG 4 zeigt den Stromverlauf durch das Halbleiterschaltelement V11 in 400facher zeitlicher Dehnung zu FIG 3 für jeweils zwei Schaltzyklen des Halbleiterschaltelementes V11, wobei diese Schaltzyklen in FIG 3 mit Pfeilen gekennzeichnet sind. Die Betriebsweise des erfindungsgemäßen Schaltnetzteiles nach FIG 1 bzw. FIG 2 unterscheidet sich grundsätzlich von den bisher bekannten freischwingenden Sperrwandler-Schaltnetzteilen, da dort eine möglichst gute Gleichspannung an die Primärwicklung nₚ des Transformators T1 geschaltet wird.

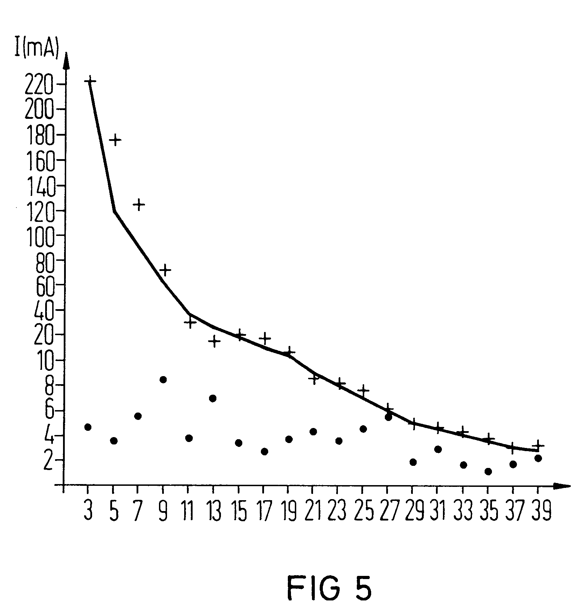

Mit der erfindungsgemäßen Schaltungsanordnung entstehen deutlich weniger Oberwellenströme auf dem Versorungsnetz, als es bei den bisher bekannten Schaltnetzteilen üblich war. Die Oberwellenströme bleiben deutlich unter den Grenzwerten, die in einer Neufassung der VDE-Vorschrift 0838 gefordert werden wird. Diese Grenzwerte für die Oberwellenströme auf dem Netz zeigt FIG 5 in Form der durchgezogenen Kurve. Die Oberwellen sind in dieser FIG in steigender Ordnung waagrecht und die dazugehörenden Ströme senkrecht in mA aufgetragen. Mit Kreuzen sind die gemessenen Oberwellenströme bei einem Schaltnetzteil, wie es in der eingangs erwähnten Siemens-Produktinformation gekennzeichnet ist, markiert während die Punkte die gemessenen Oberwellenströme bei dem erfindungsgemäßen Schaltnetzteil von FIG 1 oder FIG 2 zeigen.

Die geringen Oberwellenströme auf dem Versorungsnetz haben eine annähernd sinusförmige Stromaufnahme des erfindungsgemäßen Schaltnetzteiles zur Folge, wie in FIG 6 der Stromverlauf I₁ zeigt. Die punktierte Linie stellt dagegen den aus dem Versorgungsnetz aufgenommenen Strom I₂ bei einem Schaltnetzteil dar, wie es in Bild 25 der Siemens-Produktinformation vorgestellt wird. Mit U ist die Netzspannung gekennzeichnet.

Es hat sich herausgestellt, daß es günstig ist die in FIG 1 bzw. FIG 2 dargestellte erfindungsgemäße Schaltungsanordnung durch eine eingangsseitige Entstöreinrichtung zu ergänzen. Dazu wird zwischen Klemmen K1, K2 für eine Netzwechselspannung U₂₂₀ und die zwei Eingangsklemmen E1, E2 des Brückengleichrichters V1, V2, V3, V4 mindestens eine stromkompensierte Drossel L100 mit parallelgeschalteten Kondensator C100 geschaltet. Zusätzlich kann eine Entstördrossel L100 mit parallelgeschalteten Kondensator C101 in die Zuleitungen der Netzwechselspannung U₂₂₀ geschaltet werden. In FIG 1 bzw. 2 ist sowohl die stromkompensierte Drossel L100 mit parallelgeschalteten Kondensator C100 als auch die Entstördrossel L101 mit parallelgeschalteten Kondensator C101 zwischen die Klemmen K1, K2 und die Eingangsklemmen E1, E2 geschaltet. Diese Anordnung sorgt dafür, daß Störungen vom Versorungsnetz in das Schaltnetzteil und umgekehrt weitgehend unterdrückt werden.

## Patentansprüche

1. Schaltungsanordnung für ein freischwingendes Sperrwandler-Schaltnetzteil mit den Merkmalen:
- das Schaltnetzteil enthält einen Transformator (T1) mit einer Primärwicklung (nₚ) und einer Sekundärwicklung (nₛ₁, nₛ₂, nₛ₃), an die eine Last (R_{Q21}, R_{Q22}, R_{Q23}) anschließbar ist,
- es enthält einen Brückengleichrichter (V1...V4), mit einem Ausgangsanschluß (A1) für eine gleichgerichtete Wechselspannung (U_{W}),
- es enthält ein Halbleiterschaltelement (V11), durch das die gleichgerichtete Wechselspannung (U_{W}) in getakteter Weise an die Primärwicklung (nₚ) des Transformators (T1) anlegbar ist,
- es enthält eine Steuerungseinrichtung (IC) zum Ansteuern des Halbleiterschaltelements (V11), das eine erste Eingangsklemme (2) für ein Primärstromsignal und eine zweite Eingangsklemme (3) für ein Spannungssignal aufweist,
- an die erste Eingangsklemme (2) ist der Ausgang eines RC-Gliedes (R3, C4) angeschlossen, dem eingangsseitig die gleichgerichtete Wechselspannung zuführbar ist,
- an die zweite Eingangsklemme (3) ist der Ausgang eines Spannungsteilers (R4, R5) angeschlossen, dem eingangsseitig die gleichgerichtete Wechselspannung zuführbar ist,
**dadurch gekennzeichnet**, daß
- die gleichgerichtete Wechselspannung (U_{W}) ungeglättet an die Primärwicklung (nₚ) des Transformators (T1) anlegbar ist, und daß
- dem Spannungsteiler (R4, R5) und dem RC-Glied (R3, C4) eingangsseitig über eine eine Diode (V8) und einen Kondensator (C9) enthaltende Einweggleichrichteranordnung (EG) die gleichgerichtete Wechselspannung (U_{W}) zuführbar ist.

2. Schaltungsanordnung nach Anspruch 1,
**dadurch gekennzeichnet**, daß
die Diode (V8) der Einweggleichrichteranordnung (EG) einen Anodenanschluß aufweist, dem die ungeglättete gleichgerichtete Wechselspannung (U_{W}) zuführbar ist, und einen Katodenanschluß, der einerseits über den Kondensator (C9) der Einweggleichrichteranordnung (EG) an einen Anschluß für Bezugspotential und andererseits an das RC-Glied (R3, C4) und den Spannungsteiler (R4, R5) angeschlossen ist.

3. Schaltungsanordnung nach Anspruch 1 oder 2,
**dadurch gekennzeichnet**, daß parallel zur Ausgangsklemme (A1) und Bezugspotentialklemme (A2) des Brückengleichrichters (V1, V2, V3, V4) ein Kondensator mit einer Kapazität von etwa kleiner 10⁻⁶ F geschaltet ist.

4. Schaltungsanordnung nach einem der Ansprüche 1 bis 3,
**dadurch gekennzeichnet**, daß der Brückengleichrichter (V1, V2, V3, V4) zwei Eingangsklemmen (E1, E2) aufweist, die mindestens über eine stromkompensierte Drossel (L100) mit parallel geschalteten Kondensator (C100) an Klemmen (K1, K2) für eine Netzwechselspannung (U₂₂₀) geschaltet sind.

5. Schaltungsanordnung nach einem der Ansprüche 1 bis 4,
**dadurch gekennzeichnet**, daß zwischen die Eingangsklemmen (E1, E2) des Brückengleichrichters (V1, V2, V3, V4) und die Klemmen (K1, K2) für die Netzwechselspannung (U₂₂₀) eine Entstördrossel (L 101) mit parallel geschalteten Kondensator (C101) geschaltet ist.

6. Schaltungsanordnung nach einem der Ansprüche 1 bis 5,
**dadurch gekennzeichnet**, daß
die Einweggleichrichteranordnung (EG) eingangsseitig über mindestens ein weiteres RC-Glied (R21, C21) mit der zweiten Eingangsklemme (3) verbunden ist.

7. Schaltungsanordnung nach einem der Ansprüche 1 bis 6,
**dadurch gekennzeichnet**, daß
zwischen die Ausgangsklemme (A1) des Brückengleichrichters (V1...V4) und den Anodenanschluß der Diode (V8) eine Sicherung (F1) geschaltet ist.

## Claims

1. Circuit arrangement for a free-running flyback-convertor switched-mode power supply having the features:
- the switched-mode power supply contains a transformer (T1) having one primary winding (nₚ) and one secondary winding (nₛ₁, nₛ₂, nₛ₃) to which a load (R_{Q21}, R_{Q22}, R_{Q23}) can be connected,
- it contains a bridge rectifier (V1...V4) having an output connection (A1) for a rectified AC voltage (U_{W}),
- it contains a semiconductor switching element (V11) by means of which the rectified AC voltage (U_{W}) can be applied in a pulsed manner to the primary winding (nₚ) of the transformer (T1),
- it contains a control device (IC) for driving the semiconductor switching element (V11) which has a first input terminal (2) for a primary current signal and a second input terminal (3) for a voltage signal,
- the output of an RC element (R3, C4) to which the rectified AC voltage can be supplied on the input side is connected to the first input terminal (2),
- the output of a voltage divider (R4, R5) to which the rectified AC voltage can be supplied on the input side is connected to the second input terminal (3),
characterized in that
- the rectified AC voltage (U_{W}) can be applied unsmoothed to the primary winding (nₚ) of the transformer (T1), and in that
- the rectified AC voltage (U_{W}) can be supplied to the voltage divider (R4, R5) and to the RC element (R3, C4) on the input side via a half-wave rectifier arrangement (EG) which contains a diode (V8) and a capacitor (C9).

2. Circuit arrangement according to Claim 1, characterized in that the diode (V8) of the half-wave rectifier arrangement (EG) has an anode connection to which the unsmoothed rectified AC voltage (U_{W}) can be supplied, and has a cathode connection which is connected on the one hand via the capacitor (C9) of the half-wave rectifier arrangement (EG) to a connection for reference-earth potential, and on the other hand to the RC element (R3, C4) and the voltage divider (R4, R5).

3. Circuit arrangement according to Claim 1 or 2, characterized in that a capacitor having a capacitance of somewhat less than 10⁻⁶ F is connected in parallel with the output terminal (A1) and reference-earth potential terminal (A2) of the bridge rectifier (V1, V2, V3, V4).

4. Circuit arrangement according to one of Claims 1 to 3, characterized in that the bridge rectifier (V1, V2, V3, V4) has two input terminals (E1, E2) which are connected at least via a current-compensated inductor (L100) with a parallel-connected capacitor (C100) to terminals (K1, K2) for a mains AC voltage (U₂₂₀).

5. Circuit arrangement according to one of Claims 1 to 4, characterized in that a suppression inductor (L101) having a parallel-connected capacitor (C101) is connected between the input terminals (E1, E2) of the bridge rectifier (V1, V2, V3, V4) and the terminals (K1, K2) for the mains AC voltage (U₂₂₀).

6. Circuit arrangement according to one of Claims 1 to 5, characterized in that the half-wave rectifier arrangement (EG) is connected on the input side via at least one further RC element (R21, C21) to the second input terminal (3).

7. Circuit arrangement according to one of Claims 1 to 6, characterized in that a fuse (F1) is connected between the output terminal (A1) of the bridge rectifier (V1...V4) and the anode connection of the diode (V8).

## Revendications

1. Montage pour un bloc d'alimentation à découpage à oscillateur bloqué et à oscillations libres, présentant les caractéristiques suivantes :
- le bloc d'alimentation à découpage comporte un transformateur (T1) possédant un enroulement primaire (nₚ) et un enroulement secondaire (nₛ₁, nₛ₂, nₛ₃), auquel peut être raccordée une charge (R_{Q21}, R_{Q22}, R_{Q23}),
- il contient un redresseur en pont (V1...V4), comportant une borne de sortie (1) pour une tension alternative redressée (U_{W}),
- il contient un élément à semiconducteurs (V11), grâce auquel la tension alternative redressée (U_{W}) peut être appliquée de façon cadencée à l'enroulement primaire (nₚ) du transformateur (T1),
- il contient un dispoistif de comamnde (IC) pour la commande de l'élément à semiconducteurs (V11), qui comporte une première borne d'entrée (2) pour un signal de courant primaire et une seconde borne d'entrée (3) pour un signal de tension,
- à la première borne d'entrée (2) est raccordée la sortie d'un circuit RC (R3,C4), au côté entrée duquel peut être envoyée la tension alternative redressée,
- à la seconde borne d'entrée (3) est raccordée la sortie d'un diviseur de tension (R4,R5), au côté entrée duquel peut être envoyée la tension alternative redressée,
caractérisé par le fait que
- la tension alternative redressée (U_{W}) peut être appliquée, sans avoir été lissée, à l'enroulement primaire (nₚ) du transformateur (T1), et que
- la tension alternative redressée (U_{W}) peut être appliquée au côté entrée du diviseur de tension (R4,R5) et au côté entrée du circuit RC (R3,C4), par l'intermédiaire d'un dispositif redresseur simple alternance (EG), qui comporte une diode (V8) et un condensateur (C9).

2. Montage suivant la revendication 1, caractérisé par le fait que la diode (V8) du dispositif redresseur simple alternance (EG) comporte une borne d'anode à laquelle peut être envoyée la tension alternative redressée et non lissée (U_{W}), et une borne de cathode, qui est raccordée, d'une part, par l'intermédiaire du condensateur (C9) du dispositif redresseur simple alternance (EG), à une borne pour le potentiel de référence et, d'autre part, au circuit (R3,C4) et au diviseur de tension (R4,R5).

3. Montage suivant la revendication 1 ou 2, caractérisé par le fait qu'un condensateur possédant une capacité par exemple inférieure à 10⁻⁶ F est branché en parallèle avec la borne de sortie (A1) et la borne de potentiel de référence (A2) du redresseur en pont (V1,V2,V3, V4).

4. Montage suivant l'une des revendications 1 à 3, caractérisé par le fait que le redresseur en pont (V1,V2,V3, V4) comporte deux bornes d'entrée (E1,E2), qui sont raccordées, au moins par l'intermédiaire d'une bobine d'arrêt (L100) compensée en courant et en parallèle avec laquelle est branché un condensateur (100), à des bornes (K1,K2) pour une tension alternative (U₂₂₀) du réseau.

5. Montage suivant l'une des revendications 1 à 4, caractérisé par le fait qu'une bobine d'antiparasitage (L 101) en parallèle de laquelle est branché un condensateur (C101), est branchée entre les bornes d'entrée (E1,E2) du redresseur en pont (V1,V2,V3,V4) et les bornes (K1,K2) pour la tension alternative (U₂₂₀) du réseau.

6. Montage suivant l'une des revendications 1 à 5, caractérisé par le fait que le dispositif redresseur simple alternance (EG) est relié, côté entrée, à la seconde borne d'entrée (3), par l'intermédiaire d'au moins un autre circuit RC (R21, C21).

7. Montage suivant l'une des revendications 1 à 6, caractérisé par le fait qu'un fusible (F1) est branché entre la borne de sortie (R1) du redresseur en pont (V1...V4) et la borne d'anode de la diode (V8).
